# EUROPEAN PATENT APPLICATION

(11) **EP 4 822 758 A1**
(43) Date of publication of application: **14.10.2026**
(21) Application number: 25874002.6
(22) Date of filing: 23.09.2025
(51) Int. Cl.: H01M 4/13, H01M 4/62, H01M 10/0562, H01M 4/36, H01M 4/525, H01M 4/505, H01M 4/131, H01M 10/052, H01M 10/0585

(54) **CATHODE FOR ALL-SOLID-STATE BATTERY AND ALL-SOLID-STATE BATTERY COMPRISING SAME**

(30) Priority: 25.09.2024 KR 20240129553
(71) Applicant: LG Energy Solution, Ltd., Seoul 07335 (KR)
(72) Inventor: LEE, Choonghyeon, Daejeon 34122 (KR); KOH, Yoon Young, Daejeon 34122 (KR); KIM, Taegon, Daejeon 34122 (KR); HONG, Misun, Daejeon 34122 (KR); KWON, Hyejin, Daejeon 34122 (KR); SONG, Min Sang, Daejeon 34122 (KR)
(74) Representative: Goddar, Heinz J.
(86) International application number: PCT/KR2025/014872
(87) International publication number: WO 2026/071667

(57) **Abstract**

The present invention relates to a positive electrode for an all-solid-state battery and an all-solid-state battery comprising same. More specifically, in the manufacture of a positive electrode for an all-solid-state battery by a dry process, they can control the content of the conductive material included in the positive electrode active material layer to improve the electronic conductivity, and improve the performance of the all-solid-state battery.

## Description

### [Technical Field]

### Cross-Citation with Related Applications

This application claims the benefit of priority to Korean Patent Application No. 10-2024-0129553, filed September 25, 2024, the disclosures of which are incorporated herein by reference in their entirety.

### Technical Field

The present invention relates to a positive electrode for an all-solid-state battery and an all-solid-state battery comprising same.

### [Related Art]

A variety of batteries are being researched to overcome the limitations of the current lithium secondary batteries in terms of capacity, safety, output, large-scale applications, and microminiaturization.

Representative examples include metal-air batteries, which have a very large theoretical capacity compared to lithium-ion batteries in terms of capacity; in terms of safety, all-solid-state batteries, which have no risk of explosion; in terms of output, super capacitors; in terms of large-scale applications, NaS batteries or redox flow batteries (RFBs); and in terms of microminiaturization, thin film batteries. Continuous research is being conducted in academia and industry on these technologies.

Among various next-generation batteries, the all-solid-state battery is the battery in which the liquid electrolyte used in conventional lithium secondary batteries is replaced with a solid electrolyte, and since no flammable solvent is used in the battery, there is no ignition or explosion due to the decomposition reaction of the conventional electrolyte, which greatly improves safety. In addition, among all-solid-state batteries, technology development is continuing for sulfide-based all-solid-state batteries, which have a high ionic conductivity of solid electrolyte and can realize a high energy density of at least 900 Wh/L in theory. The sulfide-based all-solid-state battery refers to the all-solid-state battery containing a sulfide-based solid electrolyte.

In an all-solid-state battery system, lithium ions are not conducted by the liquid electrolyte contained in conventional lithium-ion batteries (LIB). Therefore, when manufacturing a positive electrode for sulfide-based all-solid-state batteries, it is necessary to increase the contact interface between the positive electrode active material and the sulfide-based solid electrolyte particles by adding sulfide-based solid electrolyte particles with a small diameter inside the positive electrode to increase the conductivity of lithium ions. In addition, to improve energy density, the physical contact between the positive electrode active material, sulfide-based solid electrolyte particles, and other components in the positive electrode must be enhanced, and the porosity of the positive electrode after calendering must be reduced, which must be maintained during charging and discharging.

In this regard, a technique of introducing a fibrillated binder into the positive electrode has been developed to increase and maintain the contact interface between the positive electrode active material and the sulfide-based solid electrolyte particles. The fibrillated binder can be formed when the binder undergoes fibrillation in the manufacture of a positive electrode by a solvent-free dry process. Thus, in order to obtain a fibrillated binder, a binder which is easily fibrillated can be introduced into the dry process, for example, poly(tetrafluoroethylene) (PTFE).

However, simply introducing a fibrillated binder into the positive electrode for an all-solid-state battery is not enough to reduce the porosity of the positive electrode for an all-solid-state battery. In this regard, there is a need to develop technologies that can further reduce the porosity of positive electrodes for an all-solid-state battery with fibrillated binders.

Meanwhile, for the positive electrode for an all-solid-state battery, not only ionic conductivity but also electronic conductivity is a required key property. In order to improve the electronic conductivity of the positive electrode, it is necessary to facilitate electron transfer between the positive electrode active material, sulfide-based solid electrolyte particles, and other components in the positive electrode. Accordingly, there is a need to develop technologies that can improve electronic conductivity by facilitating the movement of electrons within the positive electrode.

### [Prior Art Reference]

(Patent Reference 1) U.S. Patent Application Publication No. 2024-0079574

### [Detailed Description of the Invention]

### [Technical Problem]

The inventors of the present invention have conducted multifaceted research to solve the above problems and have found that not only ionic conductivity but also electronic conductivity can be improved by controlling the content of the conductive material in the positive electrode for an all-solid-state battery containing a fibrillated binder.

Accordingly, it is an object of the present invention to provide a positive electrode for an all-solid-state battery with a controlled content of conductive material.

Another object of the present invention is to provide a method of manufacturing a positive electrode for an all-solid-state battery with a controlled content of conductive material.

It is another object of the present invention to provide an all-solid-state battery comprising a positive electrode for an all-solid-state battery with a controlled content of conductive material.

### [Technical Solution]

To accomplish the above objectives, the present invention provides a positive electrode for an all-solid-state battery comprising a positive electrode active material layer containing a positive electrode active material, a sulfide-based solid electrolyte, a conductive material, and a fibrillated binder, wherein the conductive material is included in an amount of 0.1% by weight or more based on the total weight of the positive electrode active material layer.

In one example of the present invention, the conductive material comprises at least one selected from the group consisting of graphite, carbon black, carbon nanotube, carbon fiber, and graphene.

In one example of the present invention, the fibrillated binder is a fluorine-containing fibrillated binder, wherein the fluorine-containing fibrillated binder comprises at least one selected from the group consisting of polytetrafluoroethylene (PTFE) and copolymers thereof.

In one example of the present invention, the relative degree of fibrillation (A) of the positive electrode is calculated by Formula 1 below and is 4 to 6: <Formula 1> 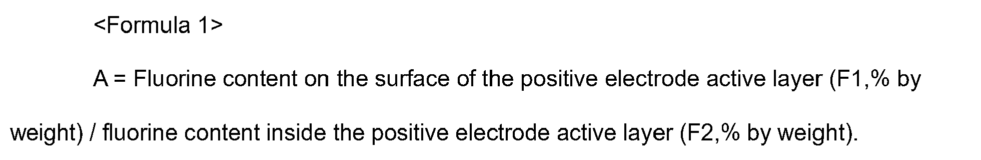 A = Fluorine content on the surface of the positive electrode active layer (F1,% by weight) / fluorine content inside the positive electrode active layer (F2,% by weight).

In one example of the present invention, the positive electrode active material comprises a surface coating layer.

In one example of the present invention, the surface coating layer comprises a lithium ion conductive oxide.

In one example of the present invention, the lithium ion conductive oxide comprises at least one selected from the group consisting of LiNbO₃, Li₄Ti₅O₁₂ and Li₃PO₄.

In one example of the present invention, the average resistance (log(R/Ω)) of the positive electrode active material area is 8 or less.

In one example of the present invention, the positive electrode may be a dry positive electrode. The dry positive electrode means a positive electrode manufactured by a dry process that does not use solvents.

The present invention also provides a method of producing a positive electrode for an all-solid-state battery, comprising the steps of: (S1) mixing a positive electrode active material, a sulfide-based solid electrolyte, a conductive material, and a binder;
(S2) applying a shear force to the mixture obtained in step (S1) to fibrillate the binder; and
(S3) performing a sheeting and calendering process using the mixture obtained in step (S2) to obtain a positive electrode active material layer,
wherein the conductive material is included in an amount of 0.1% by weight or more based on the total weight of the positive electrode active material layer.

In one example of the present invention, the shear force is applied by an agate mortar, ball milling, kneader or roll press.

In one example of the present invention, the calendering process is performed 6 to 10 times.

In one example of the present invention, the calendering process is performed uniaxially or biaxially.

The present invention also provides an all-solid-state battery comprising a positive electrode, a negative electrode, and a sulfide-based solid electrolyte film interposed therebetween.

### [Advantageous Effects]

According to the present invention, the positive electrode for an all-solid-state battery of the present invention can improve the electronic conductivity in the positive electrode by controlling the content of conductive material during the manufacture of the positive electrode, thereby reducing various types of resistance and improving the performance of the battery.

Furthermore, since the positive electrode for an all-solid-state battery of the present invention also includes a fibrillated binder, ionic conductivity can be improved by controlling the porosity of the positive electrode.

### [Brief Description of Drawings]

FIG. 1 is a schematic diagram of the positive electrode to illustrate the relative degree of fibrillation of the positive electrode according to one example of the present invention.
FIG. 2 shows a cross-sectional view of the positive electrode obtained by Scanning Spreading Resistance Microscopy (SSRM) analysis of Example 1, Example 2, and Comparative Example 1.
FIG. 3 is a histogram of the resistance of the positive electrode active materials as determined from cross-sectional photographs of the positive electrodes obtained by SSRM analysis of Example 1, Example 2, and Comparative Example 1.

### [Best Mode]

Hereinafter, the present invention will be described in more detail to provide a better understanding.

The terms and words used in this specification and claims are not to be construed in their ordinary or dictionary sense, but rather in a sense and concept consistent with the technical idea of the present invention, based on the principle that the inventor may define the terms appropriately in order to best explain his/her invention.

As used herein, the term "degree of fibrillation" means the degree to which fibrillation has progressed. Specifically, it indicates that the greater the aspect ratio of the fibrillated binder, the greater the degree of fibrillation.

As used herein, the term "relative degree of fibrillation of the positive electrode" means the ratio of the degree of fibrillation of the fluorine-containing binder present on the surface of the positive electrode active layer to the degree of fibrillation of the fluorine-containing binder present in the interior of the positive electrode active layer. Within and on the surface of the positive electrode active material layer, the fluorine-containing binder may be present in a fibrillated form, or in the form of secondary particles agglomerated from a plurality of primary particles. If the fluorine is detected within or on the surface of the positive electrode active material layer, it means that the binder is present in the form of secondary particles. This means that the higher the fluorine content, the less the binder undergoes fibrillation, and the more the binder remains in the form of secondary particles. Therefore, the degree of fibrillation of the binder can be determined by the ratio of the fluorine content detected in the interior and on the surface of the positive electrode active layer.

### Positive Electrode for an all-solid-state battery

The present invention relates to a positive electrode for an all-solid-state battery.

The positive electrode for an all-solid-state battery according to the present invention comprises a positive electrode active material layer, wherein the positive electrode active material layer comprises a positive electrode active material, a sulfide-based solid electrolyte, a conductive material and a fibrillated binder, wherein the conductive material may be comprised in an amount of at least 0.1% by weight based on the total weight of the positive electrode active material layer. The positive electrode active material layer may be formed on one side of the positive electrode current collector. If the positive electrode active material layer is in a freestanding form, the positive electrode active material layer may be used as a positive electrode.

In one example of the present invention, the conductive material can facilitate electron transfer between materials in the positive electrode active material layer to improve conductivity, reduce resistance, and improve the performance of the all-solid-state battery.

The content of the conductive material may be at least 0.1% by weight based on the total weight of the positive electrode active material layer. If the content of the conductive material is less than 0.1% by weight, the degree of improvement of the internal conductivity of the positive electrode is insignificant and the resistance of the positive electrode may increase. Specifically, the content of the conductive material may be 0.1% by weight or more, 0.2% by weight or more, 0.3% by weight or more, 0.4% by weight or more, 0.5% by weight or more, 0.6% by weight or more, 0.7% by weight or more, 0.8% by weight or more, 0.9% by weight or more, or 1% by weight or more. The content of the conductive material may be 10% by weight or less, 9% by weight or less, 8% by weight or less, 7% by weight or less, 6% by weight or less, 5% by weight or less, 4% by weight or less, 3% by weight or less, or 2% by weight or less, although the upper limit is not particularly limited. If the content of the conductive material is too high, the amount of positive electrode active material is relatively low, which can lead to a decrease in capacity and energy density.

Furthermore, the conductive material is not particularly limited as long as it prevents side reactions in the internal environment of the all-solid-state battery and has excellent electrical conductivity without causing chemical changes in the battery. Representative examples may include graphite or conductive carbon, such as natural graphite or artificial graphite; carbon blacks such as acetylene black, ketjen black, denka black, thermal black, channel black, furnace black, or lamp black; carbon nanotubes, such as single-walled carbon nanotubes or multi-walled carbon nanotubes; carbon-based materials having a crystal structure of graphene or graphite; conductive fibers, such as carbon fibers or metal fibers; carbon fluorides; metal powders, such as aluminum powder or nickel powder; conductive whiskers, such as zinc oxide or potassium titanate; conductive oxides, such as titanium oxide; and conductive polymers, such as polyphenylene derivatives. These materials may be used alone or in a mixture of two or more of the foregoing, without being limited thereto.

In addition, the conductive material may be a fibrillated material having a long aspect ratio. The long-aspect-ratio fibrillated conductive material may be a carbon nanofiber (CNF), for example, a vapor-grown carbon fiber (VGCF). When the conductive material is in the fibrillated form, the fibrillated conductive materials are connected to each other in the positive electrode to form a conductive network, which may be more advantageous for improving electronic conductivity.

Furthermore, among the fibrillated conductive materials, it may be more advantageous to improve the electronic conductivity if the length of the fibrillated conductive material is 5 µm to 30 µm and the diameter of the cross-section is 100 nm to 500 nm. Specifically, the length of the fibrillated conductive material may be 5 µm or more, 6 µm or more, 7 µm or more, 8 µm or more, 9 µm or more, 10 µm or more, 11 µm or more, 12 µm or more, or 13 µm or more, and may be 30 µm or less, 29 µm or less, 28 µm or less, 27 µm or less, 26 µm or less, 25 µm or less, 24 µm or less, 23 µm or less, 22 µm or less, 21 µm or less, 20 µm or less, 19 µm or less, 18 µm or less, 17 µm or less, 16 µm or less, or 15 µm or less. Further, the fibrillated conductive material may have a cross-sectional diameter of 100 nm or more, 110 nm or more, 120 nm or more, 130 nm or more, 140 nm or more, 150 nm or more, 160 nm or more, 170 nm or more, 180 nm or more, 190 nm or more, 200 nm or more, 210 nm or more, 220 nm or more, 230 nm or more, 240 nm or more, 250 nm or more, 260 nm or more, 270 nm or more, 280 nm or more, or 290 nm or more, and may be 500 nm or less, 490 nm or less, 480 nm or less, 470 nm or less, 460 nm or less, 450 nm or less, 440 nm or less, 430 nm or less, 420 nm or less, 410 nm or less, 400 nm or less, 390 nm or less, 380 nm or less, 370 nm or less, 360 nm or less, 350 nm or less, 340 nm or less, 330 nm or less, 320 nm or less, or 310 nm or less.

In addition, the BET specific surface area of the conductive material may be 10 m²/g or less, in which case the contact area of the conductive material and the solid electrolyte in the positive electrode may be reduced, which may be advantageous for reducing side reactions. If the BET specific surface area exceeds 10 m²/g, the contact area of the conductive material and the solid electrolyte in the positive electrode may be increased, which may rather cause electrochemical side reactions. Specifically, the BET specific surface area of the conductive material may be 10 m²/g or less, 9 m²/g or less, 8 m²/g or less, 7 m²/g or less, 6 m²/g or less, 5 m²/g or less, or 4 m²/g or less. The lower limit of the BET specific surface area of the conductive material is not particularly limited and may be, for example, greater than 0 m²/g, 1 m²/g or more, or 2 m²/g or more. The BET specific surface area can be measured and calculated by conventional gas adsorption methods or specific surface area measurement devices.

Moreover, the resistance of the conductive material may be 0.025 ohm.cm or less at a pressure of 196 MPa, in which case it may be advantageous to improve the electrical conductivity of the positive electrode. If the resistance of the conductive material exceeds 0.025 ohm.cm, the electrical conductivity may be reduced. Specifically, the resistance of the conductive material may be 0.025 ohm.cm or less, 0.024 ohm.cm or less, 0.023 ohm.cm or less, 0.022 ohm.cm or less, 0.021 ohm.cm or less, 0.02 ohm.cm or less, 0.019 ohm.cm or less, 0.018 ohm.cm or less, 0.017 ohm.cm or less, 0.016 ohm.cm or less, 0.015 ohm.cm or less, 0.014 ohm.cm or less, 0.013 ohm.cm or less, 0.012 ohm.cm or less, or 0.011 ohm.cm or less. The lower limit of the resistance of the conductive material is not particularly limited, but may be, for example, greater than 0 ohm.cm, greater than 0.001 ohm.cm, or greater than 0.005 ohm.cm. The resistance of the conductive material may refer to the powder resistance of the conductive material. Furthermore, the method of measuring the resistance of the conductive material is not particularly limited, as long as it is a method or device used in the art for measuring resistance, and may be measured, for example, using a 4 point probe system.

In one example of the present invention, the fibrillated binder may be a fluorine-containing fibrillated binder.

The fluorine-containing fibrillated binder means that a shear force is applied to the fluorine-containing binder during the manufacture of the positive electrode, thereby causing fibrillation, and the degree of fibrillation of the binder used as the raw material is controlled by the calendering process. In general, the binder may be included to facilitate bonding between the materials contained in the positive electrode active material layer and/or bonding between the positive electrode active material layer and the positive electrode current collector. Due to the fibrillated morphology of the binder, the bonding between the materials contained in the positive electrode active material layer can be further promoted, which can further reduce the porosity of the positive electrode, and furthermore, the tensile strength can be enhanced.

The fluorine-containing fibrillated binder may comprise at least one selected from the group consisting of polytetrafluoroethylene (PTFE) and copolymers thereof. However, the binder is not particularly limited as long as its physical properties can be easily modified by the calendering process to cause fibrillation.

Further, the fibrillated binder may be comprised in an amount of 0.1 to 10% by weight, based on the total weight of the positive electrode active material layer. If the content of the fibrillated binder is less than 0.1% by weight, the effect of improving bonding between the materials contained in the positive electrode active material layer may be insignificant and the tensile strength may be reduced, and if the content exceeds 10% by weight, the ionic conductivity or electronic conductivity of the positive electrode may be reduced. Specifically, the content of the fibrillated binder may be 0.1% by weight or more, 0.5% by weight or more, 1% by weight or more, 2% by weight or more, 3% by weight or more, 4% by weight or more, or 5% by weight or more, and may be 10% by weight or less, 9% by weight or less, 8% by weight or less, 7% by weight or less, or 6% by weight or less.

In one example of the present invention, the relative degree of fibrillation of the positive electrode is calculated by Formula 1 below and may be 4 to 6: <Formula 1> 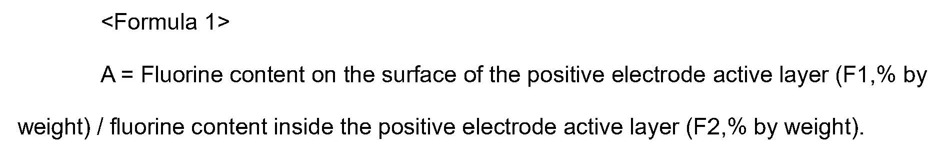 A = Fluorine content on the surface of the positive electrode active layer (F1,% by weight) / fluorine content inside the positive electrode active layer (F2,% by weight).

The positive electrode active material layer may include a fibrillated binder formed by the binder being fibrillated, and a binder in the form of non-fibrillated secondary particles. The fibrillated binder and the binder in the form of secondary particles may have different distributions within and on the surface of the positive electrode active material layer. The distribution of the fibrillated binder and the binder in the form of secondary particles may be determined by a dry process using a sheeting and calendering process. Since, depending on the distribution of the fibrillated binder and the binder in the form of secondary particle, the properties of the positive electrode containing them and the performance of the all-solid-state battery vary, this distribution is referred to as the relative degree of fibrillation (A) of the positive electrode. Here, the secondary particle means a particle agglomerated from a plurality of primary particles that are single particles.

For the relative degree of fibrillation (A) of the positive electrode, it is preferable that the degree inside the positive electrode is greater than that on the surface, corresponding to A > 1. More preferably, when 4 ≤ A ≤ 6, the tensile strength of the positive electrode may be enhanced while preventing an increase in resistance. Specifically, if the relative degree of fibrillation (A) of the positive electrode is less than 4, the fluorine-containing binder inside the positive electrode active material layer is more in the form of secondary particles rather than the fibrillated form, which means that a large amount of internal fluorine is detected. It indicates that the fibrillation of the binder inside the positive electrode has not progressed much, and the tensile strength of the positive electrode may be reduced. In addition, if the relative degree of fibrillation (A) of the positive electrode is greater than 6, the fluorine-containing binder inside the positive electrode active material layer is more in the fibrillated form rather than in the form of secondary particles, which means that the fibrillation of the binder inside the positive electrode has progressed much. As a result, the tensile strength of the positive electrode may increase, but the performance of the all-solid-state battery may be reduced due to the increase in the resistance components resulted from excessive fibrillation. Specifically, the relative degree of fibrillation (A) of the positive electrode may be 4 or greater, 4.1 or greater, 4.2 or greater, 4.3 or greater, 4.4 or greater, 4.5 or greater, 4.6 or greater, 4.7 or greater, 4.8 or greater, 4.9 or greater, or 5 or greater, and may be 6 or less, 5.9 or less, 5.8 or less, 5.7 or less, 5.6 or less, 5.5 or less, 5.4 or less, 5.3 or less, 5.2 or less, or 5.1 or less.

The content of the fluorine elements on the surface of the positive electrode active material layer (F1,% by weight) and the content of the fluorine elements inside the positive electrode active material layer (F2,% by weight) may be measured by energy-dispersive X-ray spectroscopy (EDS). Specifically, (a) the interior and surface of the positive electrode active layer can be analyzed by EDS, and then (b) the fluorine content on the surface of the positive electrode active layer (F1,% by weight) and the fluorine content inside the positive electrode active layer (F2,% by weight) can be measured.

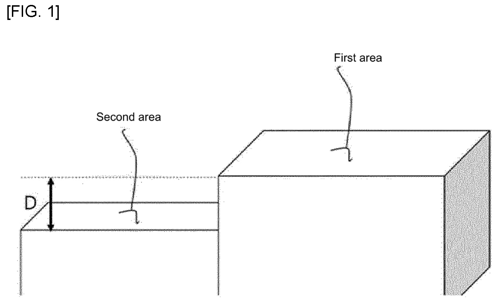

FIG. 1 is a schematic diagram of the positive electrode to illustrate the relative degree of fibrillation of the positive electrode according to one example of the present invention.

Referring to FIG. 1, the first area may correspond to the surface of the positive electrode active material layer, and the second area may correspond to the interior of the positive electrode active material layer.

The interior of the positive electrode active material layer refers to a portion of the positive electrode that is cut from the surface by a certain thickness (D). For example, the certain thickness (D) may mean 20% to 40% based on the total thickness of the positive electrode. Specifically, the certain thickness (D) may be 20% or more, 21% or more, 22% or more, 23% or more, 24% or more, 25% or more, 26% or more, 27% or more, 28% or more, 29% or more, or 30% or more, and may be 40% or less, 39% or less, 38% or less, 37% or less, 36% or less, 35% or less, 34% or less, 33% or less, 32% or less, or 31% or less based on the overall thickness of the positive electrode.

In one example of the present invention, the sulfide-based solid electrolyte may comprise a compound represented by Formula 1 below:

<Formula 1> LiₐM_{b}SX_{c}

wherein M is selected from P, Sn, Sb, As and Ge;
X is selected from Cl, Br and I;
5≤a<7.5, 0.5<b<1.5, and 0.5<c<2.

Further, the sulfide-based solid electrolyte may be included in an amount of 10 to 50% by weight based on the total weight of the positive electrode active material layer. Specifically, the content of the sulfide-based solid electrolyte may be 10% by weight or more, 20% by weight or more, or 30% by weight or more, and may be 50% by weight or less, 45% by weight or less, or 40% by weight or less. If the content of the sulfide-based solid electrolyte is less than 10% by weight, it may not be sufficient to fill the voids formed in the positive electrode active material layer, making it difficult to reduce the porosity of the positive electrode active material layer, and if it is greater than 50% by weight, the content of the positive electrode active material, the fibrillated binder or the conductive material may be relatively reduced, resulting in a decrease in the performance of all-solid-state batteries.

In one example of the present invention, the positive electrode active material is not particularly limited as long as it is a material capable of reversibly adsorbing and releasing lithium ions. For example, the positive electrode active material may be a layered compound such as lithium cobalt oxide (LiCoO₂), lithium nickel oxide (LiNiO₂), Li[NiₓCo_{y}Mn_{z}Mᵥ]O₂ (wherein M is any one or two or more elements selected from the group consisting of Al, Ga and In; and 0.3≤x<1.0, 0≤y, z≤0.5, 0≤v≤0.1, and x+y+z+v=1), Li(LiₐM_{b-a-b'}M'_{b'})O_{2-c}A_{c} (wherein 0≤a≤0.2, 0.6≤b≤1, 0≤b'≤0.2, and 0≤c≤0.2; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula Li_{1+y}Mn_{2-y}O₄ (wherein y is 0 to 0.33), LiMnO₃, LiMn₂O₃, or LiMnO₂; a lithium copper oxide (Li₂CuO₂); a vanadium oxide, such as LiV₃O₈, LiFe₃O₄, V₂O₅, or Cu₂V₂O₇; a Ni site-type lithium nickel oxide represented by formula LiNi_{1-y}MyO₂ (wherein M is Co, Mn, Al, Cu, Fe, Mg, B or Ga, and y is 0.01 to 0.3); a lithium manganese complex oxide represented by formula LiMn_{2-y}M_{y}O₂ (wherein M is Co, Ni, Fe, Cr, Zn, or Ta, and y is 0.01 to 0.1) or Li₂Mn₃MO₈ (wherein M is Fe, Co, Ni, Cu, or Zn); LiMn₂O₄, in which a portion of the Li in the formula is substituted by an alkaline earth metal ion; a disulfide compound; Fe₂(MoO₄)₃; and the like, but not limited thereto.

Further, the positive electrode active material may be included in an amount of 55 to 90% by weight based on the total weight of the positive electrode active material layer. Specifically, the content of the positive electrode active material may be 55% by weight, 60% by weight or more, or 65% by weight or more, 83% by weight or less, 85% by weight or less, or 90% by weight or less. If the content of the positive electrode active material is less than 55% by weight, the battery performance may be reduced, and if the content is greater than 90% by weight, the mass transfer resistance may be increased.

Moreover, the positive electrode active material may comprise a surface coating layer. The surface coating layer may comprise a lithium ion conductive oxide. If a surface coating layer comprising a lithium ion conductive oxide is formed on the surface of the positive electrode active material, direct contact of the positive electrode active material with a sulfide-based solid electrolyte can be prevented, thereby preventing a decomposition reaction of the sulfide-based solid electrolyte.

The lithium ion conductive oxide may comprise at least one selected from the group consisting of LiNbO₃, Li₄Ti₅O₁₂ and Li₃PO₄. In addition, the lithium ion conductive oxide may be amorphous or crystalline. Furthermore, the method of forming a surface coating layer comprising the lithium ion conductive oxide may be, but is not limited to, a spray coating, an immersion method, and the like, and various methods can be used to form a coating layer on the surface of the positive electrode active material.

In one example of the present invention, the positive electrode active material layer may have reduced porosity, reduced thickness, improved tensile strength, and reduced interfacial resistance depending on the degree of fibrillation of the positive electrode as described above. In this case, the interfacial resistance may refer to the interfacial resistance between the positive electrode active material layer and the positive electrode current collector or between the positive electrode active material layer and the sulfide-based solid electrolyte film.

The porosity of the positive electrode active material layer may be 11% to 15%. Porosity above 15% can reduce the energy density of an all-solid-state battery. Specifically, the porosity may be 11% or more, 11.1% or more, 11.2% or more, 11.3% or more, 11.4% or more, 11.5% or more, 11.6% or more, 11.7% or more, 11.8% or more, 11.9% or more, 12% or more, 12.1% or more, 12.2% or more, 12.3% or more, 12.4% or more, 12.5% or more, 12.6% or more, 12.7% or more, 12.8% or more, 12.9% or more, 13% or more, and may be 15% or less, 14.9% or less, 14.8% or less, 14.7% or less, 14.6% or less, 14.5% or less, 14.4% or less, 14.3% or less, 14.2% or less, 14.1% or less, or 14% or less. The porosity may refer to the volume (vol%) of the pores relative to the total volume of the positive electrode active material layer. Furthermore, if the positive electrode active material layer itself is used as a positive electrode, without the positive electrode current collector, the porosity of the positive electrode active material layer may refer to the porosity of the positive electrode.

Further, the thickness of the positive electrode comprising the positive electrode active material layer after calendering may be 120 µm or less. If the thickness is greater than 120 µm, it may act as a resistance when operating the battery. The energy density of an all-solid-state battery utilizing the positive electrode may be reduced. Specifically, the thickness may be 120 µm or less, 115 µm or less, 110 µm or less, 105 µm or less, 100 µm or less, 95 µm or less, 90 µm or less, 85 µm or less, or 80 µm or less. The lower limit of the thickness is not particularly limited, but may be 50 µm or more, 55 µm or more, 60 µm or more, or 65 µm or more.

Further, the interfacial resistance may be 60 ohm.cm² or less. If the interfacial resistance exceeds 60 ohm.cm², the electrical conductivity within the positive electrode may be reduced and charging and discharging performance may be reduced. Specifically, the interfacial resistance may be 60 ohm.cm² or less, 55 ohm.cm² or less, 50 ohm.cm² or less, 45 ohm.cm² or less, 40 ohm.cm² or less, 35 ohm.cm² or less, or 30 ohm.cm² or less. The lower limit of the interfacial resistance is not specifically limited, but may be greater than 0 ohm.cm², 5 ohm.cm² or more, or 10 ohm.cm² or more.

In one example of the present invention, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, stainless steel, aluminum, nickel, titanium, palladium, calcined carbon, stainless steel whose surface is treated with carbon, nickel, or silver, aluminum-cadmium alloy, and the like may be used as the positive electrode current collector.

The positive electrode current collector may have a microscopic uneven structure on the surface of the positive electrode current collector or adopt a three-dimensional porous structure to strengthen the binding force with the positive electrode active material layer. Accordingly, the positive electrode current collector may comprise various forms such as film, sheet, foil, mesh, net, porous material, foam, nonwoven material, and the like.

In one example of the present invention, the positive electrode active material layer may be solvent-free. In other words, the positive electrode active material layer may be prepared by a solvent-free process that does not use a solvent.

Since the positive electrode active material layer does not use a solvent in the manufacturing process, the phenomenon that the crystal structure of the sulfide-based solid electrolyte is destroyed by the solvent, resulting in a decrease in ionic conductivity, can be prevented.

In one example of the present invention, the average resistance (log(R/Ω)) of the positive electrode active material area included in the positive electrode may be 8 or less. Specifically, the average resistance of the positive electrode active material area may be 8 or less, 7.9 or less, 7.8 or less, 7.7 or less, 7.6 or less, or 7.5 or less. If the average resistance of the positive electrode active material area exceeds 8, the performance of the all-solid-state battery may be degraded. Here, the average resistance of the positive electrode active material area can be obtained using SSRM. Typically, SSRM analysis can be used using an Atomic Force Microscopy (AFM) tip to analyze an area of around a few tens of micrometers, making it possible to measure the resistance changes that occur in the positive electrode active material area of a few micrometers in size. For example, the volume resistance measurement of a positive electrode is taken on a positive electrode that is a few centimeters in size to analyze the resistance of the entire positive electrode. SSRM can analyze more localized areas, thereby analyzing the resistance within the actual positive electrode active material area.

According to the present invention, the positive electrode for an all-solid-state battery of the present invention can improve the electronic conductivity in the positive electrode by controlling the content of conductive material during the manufacture of the positive electrode, thereby reducing various types of resistance and improving the performance of the battery.

In addition, the degree of fibrillation of the fibrillated binder included in the positive electrode can be controlled by the calendering process during the manufacture of the positive electrode, and the fibrillated binder with controlled degree of fibrillation results in the improvement of the energy density of the all-solid-state battery.

### Method for Producing Positive Electrode for an all-solid-state battery

The present invention relates to a method of producing a positive electrode for an all-solid-state battery.

A method of manufacturing a positive electrode for an all-solid-state battery according to the present invention comprises the steps of: (S1) mixing a positive electrode active material, a sulfide-based solid electrolyte, a conductive material and a binder; (S2) applying a shear force to the mixture obtained in step (S1) to fibrillate the binder; and (S3) performing a sheeting and calendering process using the mixture obtained in step (S2) to obtain a positive electrode active material layer, wherein the conductive material may be comprised in an amount of at least 0.1% by weight or more, based on the total weight of the positive electrode active material layer.

The specific substances, properties, and contents of the positive electrode active material, sulfide-based solid electrolyte, conductive material, and binder used in the manufacturing method of a positive electrode for an all-solid-state battery according to the present invention are as described above, and detailed descriptions thereon will be omitted.

In step (S1) of the method of manufacturing a positive electrode for an all-solid-state battery according to the present invention, a positive electrode active material, a sulfide-based solid electrolyte, a conductive material, and a binder may be mixed.

The positive electrode active material, sulfide-based solid electrolyte, conductive material and binder used as raw materials are all in powder form, and they can be mixed uniformly in consideration of processability and product reliability. The mixing method is not particularly limited as long as it is capable of uniformly mixing materials in powder form. The binder refers to the raw material of the fibrillated binder included in the positive electrode for an all-solid-state battery described above.

In step (S2) of the method of manufacturing a positive electrode for an all-solid-state battery according to the present invention, a shear force is applied to the mixture obtained in the step (S1) to fibrillate the binder.

The shear force may cause the binder contained in the mixture to be physically deformed and fibrillated. As mentioned above, the binder used as a raw material may have properties that make it physically susceptible to deformation. Furthermore, in order to apply a shear force to the mixture, mixing can be performed physically by introducing the mixture into an agate mortar, ball milling, kneader or roll press. During the physical mixing, the binder may be physically deformed by friction with the powder particles in the mixture by shear force applied to the binder, causing fibrillation.

In step (S3) of the method of manufacturing a positive electrode for an all-solid-state battery according to the present invention, a sheeting and calendering process is performed using the mixture obtained in step (S2) to obtain a positive electrode active material layer. In this case, the mixture obtained in step (S2) above may be used as it is, or after being pulverized.

The sheeting process is the step of first forming the mixture comprising the fibrillated binder in step (S1) into a film form. In addition, the calendering process may further perform calendering of the film-shaped mold to control the degree of fibrillation of the binder, and to control the porosity, thickness, or tensile strength of the positive electrode active material layer. Moreover, the sheeting and calendaring process may cause the positive electrode active material layer to be formed into a film with controlled properties such as the degree of fibrillation of the binder, porosity, thickness, or tensile strength.

In one example of the present invention, the calendering process enables control of the porosity, thickness, and tensile strength of the positive electrode active material layer. The calendering process refers to the process of passing the object to be processed between two rollers.

The calendaring process may be performed 6 to 10 times. Here, the number of times of the calendering process may refer to the number of times the object to be processed passes between the two rollers. If the number of times of the calendering process is less than 6, the effect of reducing the thickness and porosity of the positive electrode active material layer and improving the tensile strength may be insignificant, and if it is more than 10, the processability may be degraded. Specifically, the process may be performed 6 times or more, 7 times or more, and 10 times or less, 9 times or less, or 8 times or less.

In one example of the present invention, the orientation of the calendering process may be uniaxial or biaxial. As used herein, "uniaxial" means that calendering is performed in one direction, while "biaxial" means that calendering is performed in one direction and then alternately in a direction perpendicular to the horizontal surface of the positive electrode active material layer.

If the calendering process is performed uniaxially, the fibrillation of the binder becomes directional. On the other hand, if the calendering process is performed biaxially, the fibrillation of the binder acquires uniform multi-directional orientation, which may reduce strength variations between different orientations.

In the step (S4) of the method for manufacturing a positive electrode for an all-solid-state battery according to the present invention, if the positive electrode active material layer is not in a free-standing form, the step (S4) may further comprise the step of attaching the positive electrode active material layer in the film form obtained in step (S3) to the positive electrode current collector so as to manufacture a positive electrode for an all-solid-state battery.

The type and properties of the positive electrode current collector are as described above.

### All-Solid-State Battery

The present invention also relates to an all-solid-state battery comprising the positive electrode.

An all-solid-state battery according to the present invention includes the positive electrode, a negative electrode, and a sulfide-based solid electrolyte film interposed therebetween. The positive electrode is as described above.

In one example of the present invention, the negative electrode comprises a negative electrode active material layer, wherein the negative electrode active material layer may be formed on one side of the negative electrode current collector.

The negative electrode active material layer may comprise a negative electrode active material, a conductive material, and a binder. Alternatively, the negative electrode active material layer may be an anodeless layer.

Further, in the negative electrode active material layer, the negative electrode active material may comprise a material capable of reversibly intercalating or deintercalating lithium (Li⁺), a material capable of reacting with lithium ions to reversibly form a lithium-containing compound, a lithium metal, or a lithium alloy.

The material capable of reversibly intercalating or deintercalating the lithium ions (Li⁺) may be, for example, crystalline carbon, amorphous carbon, or a mixture thereof. The material capable of reacting with the lithium ions (Li⁺) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, and may be 70% by weight or less, or 80% by weight or less. If the content of the negative electrode active material is less than 40% by weight, the connectivity between the wet negative electrode active material layer and the dry negative electrode active material layer may be insufficient, and if the content exceeds 80% by weight, the mass transfer resistance may be greater.

In addition, the binder is a component that assists in the binding of the negative electrode active material and the conductive material or the binding to a negative electrode current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride-co-hexafluoropropene). Preferably, the binder may comprise polytetrafluoroethylene (PTFE).

Further, the binder may be comprised in an amount of 0.5% by weight to 4% by weight based on the total weight of the negative electrode active material layer, and more specifically, the content of the binder may be 0.5% by weight or more, 1% by weight or more, 1.5% by weight or more, and may be 3% by weight or less, 3.5% by weight or less, or 4% by weight or less. If the binder content is less than 0.5% by weight, the binding of the negative electrode active material to the negative electrode current collector may be reduced, and if the binder content is greater than 4% by weight, the binding may be improved, but the content of the negative electrode active material may be reduced, resulting in a lower cell capacity.

Furthermore, the conductive material is not particularly limited as long as it prevents side reactions in the internal environment of an all-solid-state battery and provides excellent electrical conductivity without causing chemical changes in the battery. Representative examples may include graphite or conductive carbon, such as natural graphite or artificial graphite; carbon blacks such as acetylene black, ketjen black, denka black, thermal black, channel black, furnace black, or lamp black; carbon-based materials having a crystal structure of graphene or graphite; conductive fibers, such as carbon fibers or metal fibers; carbon fluorides; metal powders, such as aluminum powder or nickel powder; conductive whiskers, such as zinc oxide or potassium titanate; conductive oxides, such as titanium oxide; and conductive polymers, such as polyphenylene derivatives. These materials may be used alone or in a mixture of two or more of the foregoing, without being limited thereto. Preferably, the conductive material may comprise a vapor-grown carbon fiber (VGCF).

The conductive material may be typically comprised in an amount of 1% by weight to 5% by weight based on the total weight of the negative electrode active material layer, and more specifically, may be 1% by weight or more, 1.5% by weight or more, 2% by weight or more, and may be 4% by weight or less, 4.5% by weight or less, or 5% by weight or less. If the content of the conductive material is too small, such as less than 1% by weight, the effect of improving the electrical conductivity may not be expected or the electrochemical properties of the battery may be degraded, and if the content is too large, such as more than 5% by weight, the amount of negative electrode active material may be relatively small, resulting in a decrease in capacity and energy density. The method of incorporating the conductive material into the negative electrode is not substantially limited, and any conventional method known in the art can be used, such as mixing with or coating the negative electrode active material.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, similar to the positive electrode current collector, the negative electrode current collector can be in various forms, such as a film, sheet, foil, net, porous material, foam, nonwoven material, and the like, with fine irregularities formed on the surface.

The method of manufacturing a negative electrode is not particularly limited, and a negative electrode can be manufactured by forming a negative electrode active material layer on the negative electrode current collector using a conventional method of forming a layer or a film in the art. For example, methods such as pressing, coating, or deposition can be utilized. The negative electrode of the present invention also includes a case in which a metallic lithium thin film is formed on a metal plate by initial charging after assembling the battery without a lithium thin film on the negative electrode current collector.

Furthermore, the anodeless layer refers to a negative electrode layer in which no lithium metal or lithium alloy that can be a source of lithium among the negative electrode active materials is present in the negative electrode at the time of initial assembly of the battery, but lithium is precipitated in the negative electrode by charging. A battery comprising the anodeless layer may be referred to as an anodeless battery.

In the anodeless battery, during the charging and discharging of the battery, lithium ions released from the positive electrode migrate to the negative electrode to form a negative electrode active material layer. For example, during charging of the battery, lithium ions are released from the positive electrode active material and migrate to the negative electrode to form a lithium metal consisting purely of lithium, forming a lithium metal layer on the negative electrode current collector, or forming a lithium metal structure in any other form other than a layer form. Any other form may refer to, for example, a structure in which the lithium metal is agglomerated in the form of particles.

In one example of the present invention, the sulfide-based solid electrolyte included in the sulfide-based solid electrolyte film may be represented by Formula 1 below.

<Formula 1> LiₐM_{b}SX_{c}

wherein M is selected from P, Sn, Sb, As and Ge;
X is selected from Cl, Br and I;
5≤a<7.5, 0.5<b<1.5, and 0.5<c<2.

However, the sulfide-based solid electrolyte is not limited to these compounds, and a wide range of sulfide-based solid electrolytes conventionally used in the art may be used.

### Battery Module

The present invention also relates to a battery module comprising the all-solid-state battery as a unit cell, a battery pack comprising the battery module, and a device comprising the battery pack as a power source.

Specific examples of the device may include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

### [Mode for Practicing the Invention]

Hereinafter, preferred examples of the present invention are described for the purpose of illustrating the present invention, but it will be apparent to those skilled in the art that various changes and modifications are possible within the scope of the present invention and the technical idea, and that such changes and modifications fall within the scope of the appended patent claims.

In the following examples and comparative examples, a positive electrode and an all-solid-state battery comprising same were prepared according to the composition of the positive electrode active material layer as described in Table 1 below.

**[Table 1]**

| | Composition of positive electrode active material layer (% by weight) | | | |
|---|---|---|---|---|
| | Positive electrode active material | Sulfide-based solid electrolyte | Conductive material | Binder |
| Example 1 | 78 | 19.5 | 1 | 1.5 |
| Example 2 | 78 | 20.3 | 0.2 | 1.5 |
| Comparative Example 1 | 78 | 20.5 | 0 | 1.5 |

### Example 1

### 1-1. Preparation of a positive electrode

The positive electrode was prepared as follows using LiN_{0.8}Co_{0.1}Mn_{0.1}O₂(NCM 811) as a positive electrode active material, Li₆PS₅Cl as a sulfide-based solid electrolyte, vapor-grown carbon fiber (VGCF) as a conductive material, and polytetrafluoroethylene (PTFE) as a binder.

Powder mixing of the positive electrode active material, sulfide-based solid electrolyte, conductive material, and binder was performed in a weight ratio of 78 : 19.5 : 1 : 1.5. Specifically, the positive electrode active material and the sulfide-based solid electrolyte were quantified in a powder state and mixed using a blade mixer in a dry room environment. Then, the conductive material was quantified, added and further mixed. Then, the binder was quantified, added and further mixed to obtain a mixture.

The mixture was placed in an agate mortar, and the binder included in the mixture was fibrillated using the agate mortar. The mixture was then passed between two rollers for sheeting, and then calendered through a calendering process to obtain a film-like positive electrode active material layer. The calendaring process was conducted six times.

### Example 2

The positive electrode was prepared in the same manner as in Example 1, except that the positive electrode active material, sulfide-based solid electrolyte, conductive material, and binder were used in a weight ratio of 78 : 20.3 : 0.2 : 1.5.

### Comparative Example 1

The positive electrode was prepared in the same manner as in Example 1, except that no conductive material was used.

### Experimental Example 1: Evaluation of positive electrode properties based on conductive material content

The properties of the positive electrode were evaluated as follows, depending on the content of the conductive material included in the positive electrode active layer.

### (1) Measurement of resistance of positive electrode active material area

After positive electrode manufacture, a warm isostatic press (WIP) was performed to increase the positive electrode density, followed by Ar ion milling to fabricate a positive electrode specimen, which was then mounted on an atomic force microscope (AFM) located in the glovebox. Using a conductive diamond probe, contact mode-based scanning spreading resistance microscopy (SSRM) measurement was performed on the positive electrode specimen. From the resulting log(R/Ω) image, the value of each pixel in the positive electrode active material area was extracted to calculate the mean and deviation of the resistance of the positive electrode active material.

The instrument used for SSRM measurements was the Dimension Icon^{®} (Bruker, diamond coated silicon cantilever).

### (2) Measurement of resistance of positive electrode - Multi probe

The positive electrode was pulverized to a certain size, faced with the current collector, packaged, and subjected to a warm isostatic press (WIP). Then, the volume resistance of the positive electrode in the packaging was observed using an electrode resistance measurement system (RM2610, Hioki).

Table 2 below shows the averages and deviations of the resistance of the positive electrode active material calculated from the SSRM analysis results and the measured values of the volume resistance of the positive electrode.

**[Table 2]**

| | Example 1 | Example 2 | Comparative Example 1 |
|---|---|---|---|
| Average of positive electrode active material resistance (log(R/Ω)) | 7.43 | 7.67 | 8.2 |
| Deviation of positive electrode active material resistance (log(R/Ω)) | 0.63 | 0.61 | 0.68 |
| Positive electrode volume resistance (ohm.cm) | 3300 | 5600 | 9500 |

As shown in Table 2 above, Comparative Example 1, which does not use a conductive material at the positive electrode, has a large mean and deviation of positive electrode active material resistance and a large volume resistance of the positive electrode.

Thus, it can be seen that using the appropriate amount of conductive material at the positive electrode is beneficial to reduce resistance. In addition, it was confirmed that, among Example 1 and Example 2, where the positive electrode includes a conductive material, the means and deviations of the positive electrode active material resistance are smaller in Example 1, where the content of the conductive material is relatively large, and the volume resistance of the positive electrode is also smaller.

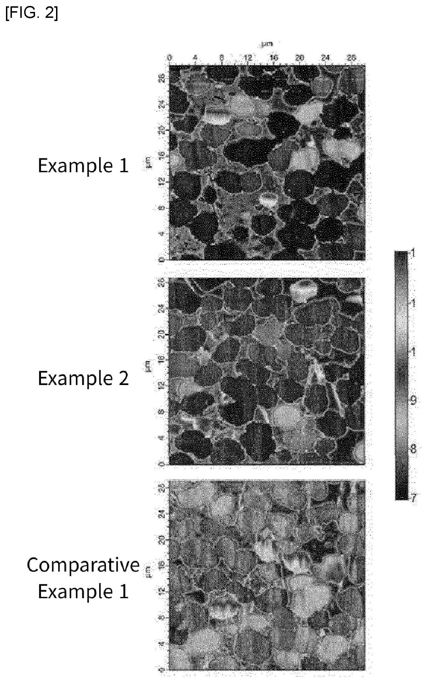

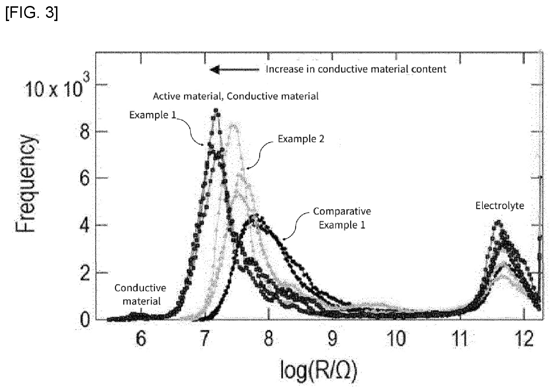

FIG. 2 shows cross-sectional photographs of the positive electrodes obtained by SSRM analysis of Example 1, Example 2, and Comparative Example 1, and FIG. 3 shows a histogram of the resistance of the positive electrode active materials determined from the cross-sectional photographs of the positive electrodes obtained by SSRM analysis of Example 1, Example 2, and Comparative Example 1.

In FIG. 2, the content of the conductive material in the positive electrode decreased from Example 1 to Example 2 and Comparative Example 1, and the color changed from blue to sky blue and green. In FIG. 3, it can be seen that the average positive electrode active material resistance increased from Example 1 to Example 2 and Comparative Example 1.

Thus, it can be seen in FIG. 2 that the average positive electrode active material resistance increases as the color changes to blue, light blue, and green.

## Claims

1. A positive electrode for an all-solid-state battery comprising a positive electrode active material layer containing a positive electrode active material, a sulfide-based solid electrolyte, a conductive material, and a fibrillated binder,
wherein the conductive material is included in an amount of 0.1% by weight or more based on the total weight of the positive electrode active material layer.

2. The positive electrode for an all-solid-state battery according to claim 1,
wherein the conductive material comprises at least one selected from the group consisting of graphite, carbon black, carbon nanotube, carbon fiber, and graphene.

3. The positive electrode for an all-solid-state battery according to claim 1,
wherein the fibrillated binder is a fluorine-containing fibrillated binder,
wherein the fluorine-containing fibrillated binder comprises at least one selected from the group consisting of polytetrafluoroethylene (PTFE) and copolymers thereof.

4. The positive electrode for an all-solid-state battery according to claim 1,
wherein the relative degree of fibrillation (A) of the positive electrode is calculated by Formula 1 below and is 4 to 6: <Formula 1> $A = Fluorine content on the surface of the positive electrode active material layer \left(F1\right)$
in % by weight / fluorine content inside the positive electrode active material layer (F2) in % by weight.

5. The positive electrode for an all-solid-state battery according to claim 1,
wherein the positive electrode active material comprises a surface coating layer.

6. The positive electrode for an all-solid-state battery according to claim 5,
wherein the surface coating layer comprises a lithium ion conductive oxide.

7. The positive electrode for an all-solid-state battery according to claim 6,
wherein the lithium ion conductive oxide comprises at least one selected from the group consisting of LiNbO₃, Li₄Ti₅O₁₂ and Li₃PO₄.

8. The positive electrode for an all-solid-state battery according to claim 1,
wherein the average resistance log(R/Ω) of the positive electrode active material area is 8 or less.

9. A method of producing a positive electrode for an all-solid-state battery, comprising the steps of: (S1) mixing a positive electrode active material, a sulfide-based solid electrolyte, a conductive material, and a binder;
(S2) applying a shear force to the mixture obtained in step (S1) to fibrillate the binder; and
(S3) performing a sheeting and calendering process using the mixture obtained in step (S2) to obtain a positive electrode active material layer,
wherein the conductive material is included in an amount of 0.1% by weight or more based on the total weight of the positive electrode active material layer.

10. The method of producing a positive electrode for an all-solid-state battery according to claim 9,
wherein the shear force is applied by an agate mortar, ball milling, kneader or roll press.

11. The method of producing a positive electrode for an all-solid-state battery according to claim 9,
wherein the calendering process is performed 6 to 10 times.

12. The method of producing a positive electrode for all-solid-state battery according to claim 9,
wherein the calendering process is performed uniaxially or biaxially.

13. An all-solid-state battery comprising a positive electrode according to claim 1, a negative electrode, and a sulfide-based solid electrolyte film interposed therebetween.
